# EUROPÄISCHE PATENTANMELDUNG

(11) **EP 2 343 855 A1**
(43) Veröffentlichungstag der Anmeldung: **13.07.2011**
(21) Anmeldenummer: 11000152.6
(22) Anmeldetag: 11.01.2011
(51) Int. Cl.: H04L 12/24

(54) **Verfahren zur Prädiktion von Fehlerzuständen auf Netzwerkgeräten**

(30) Priorität: 12.01.2010 DE 102010004481
(71) Anmelder: Hirschmann Automation and Control GmbH, 72654 Neckartenzlingen (DE)
(72) Erfinder: Kleineberg, Oliver, 73240 Wendlingen (DE); Braun, Tobias, 73066 Uhingen (DE)
(74) Vertreter: Greif, Thomas

(57) **Zusammenfassung**

Die Erfindung betrifft ein Verfahren zum Betreiben eines Netzwerkinfrastrukturgerätes, wobei zumindest ein Betriebsparameter des Netzwerkinfrastrukturgerätes erfasst wird und dann, wenn der erfasste Wert des Betriebsparameters einen vorgegebenen Grenzwert überschreitet, eine Fehlermeldung erzeugt wird, wobei erfindungsgemäß vorgesehen ist, daß der Betriebsparameter einen Toleranzbereich aufweist und erfasst wird, ob der über die Zeit erfasste Wert für den Betriebsparameter den Toleranzbereich verlässt und sich in Richtung des vorgegebenen Grenzwertes entwickelt, wobei dann, wenn sich der Betriebsparameter in Richtung des Grenzwertes entwickelt, schon vor Erreichen des Grenzwertes der zukünftige Zustand des Netzwerkinfrastrukturgerätes vorhergesagt und eine Meldung erzeugt wird.

## Beschreibung

Die Erfindung betrifft ein Verfahren zum Betreiben eines Netzwerkinfrastrukturgerätes, wobei zumindest ein Betriebsparameter des Netzwerkinfrastrukturgerätes erfasst wird und dann, wenn der erfasste Wert des Betriebsparameters einen vorgegebenen Grenzwert überschreitet, eine Fehlermeldung erzeugt wird, gemäß den Merkmalen des Oberbegriffes des Patentanspruches 1.

Netzwerkinfrastrukturgeräte (auch beispielsweise Netzwerkkomponenten) sind technische Geräte, die innerhalb eines Netzwerkes, beispielsweise eines Daten- oder Telekommunikationsnetzwerkes, eingesetzt werden. Hierbei handelt es sich vorzugsweise um sogenannte Switches oder Routers, wobei aber auch andere Geräte, die innerhalb eines Netzwerkes Anwendung finden (wie zum Beispiel Sensoren oder Aktuatoren), in Betracht kommen können.

Die Idee beschreibt, wie in der Zukunft auftretende Fehler auf einem technischen Gerät, beispielsweise einer Netzwerkkomponente (= Netzwerkinfrastrukturgerät wie Ethernet Switch, Router oder dergleichen), bereits in der Gegenwart detektiert werden können, um so diese Fehler zu verhindern und dadurch die Ausfallzeit zu reduzieren.

Bekannt und Stand der Technik sind Mechanismen, die innerhalb eines Gerätes, beispielsweise einer Netzwerkkomponente, deren aufgenommene und gespeicherte Parameter auf Grenzwertüberschreitungen hin prüfen (beispielsweise die Gerätetemperatur) und im Falle eines Grenzwertübertritts eine Nachricht erzeugen, um auf diese Grenzwertüberschreitung hinzuweisen. Ein Beispiel hierfür ist eine sogenannte Trap, ein Instrument des Simple Network Management Protocols (SNMP) und bezeichnet eine Nachricht, die unaufgefordert gesendet wird und das Auftreten eines Ereignisses signalisiert.

Großer Nachteil dieser Funktionsweise ist, dass ein Fehler erst dann erkannt und gemeldet wird, wenn der Grenzwert überschritten wurde, d.h. der Fehler schon aufgetreten ist.

Diese Vorgehensweise soll durch eine Vorhersage von Zuständen unterstützt werden. Die Aufgabe ist darin zu sehen, dass die Fehler also detektiert werden sollen, wenn diese sich andeuten und nicht erst bei Fehlereintritt.

Die Herausforderungen an den Prädiktionsalgorithmus liegen bei folgenden Punkten:
1. Der Algorithmus muss die Fehler bereits im Ansatz erkennen und melden.
2. Die Dynamik muss insofern berücksichtigt werden, dass auch kurzfristige Zustandsänderungen in die Prädiktion mit einfließen. Jedoch darf deren Einfluss nicht zu hoch sein, da es sonst zu häufigen Fehlmeldungen kommen kann.

Diese Aufgabe ist durch die Merkmale des Patentanspruches 1 gelöst.

Erfindungsgemäß ist vorgesehen, dass der (oder bei mehreren jeder) Betriebsparameter einen Toleranzbereich aufweist und erfasst wird, ob der über die Zeit erfasste Wert für den (oder die) Betriebsparameter den Toleranzbereich verlässt und sich in Richtung des vorgegebenen Grenzwertes entwickelt, wobei dann, wenn sich der Betriebsparameter in Richtung des Grenzwertes entwickelt, schon vor Erreichen des Grenzwertes der zukünftige Zustand des Netzwerkinfrastrukturgerätes vorhergesagt und eine Meldung erzeugt wird.

Der Vorteil der Erfindung liegt also darin, dass nicht wie bisher im Stand der Technik abgewartet wird, dass der Toleranzbereich, den jeder Betriebsparameter eines Gerätes hat, verlassen wird und der Grenzwert nicht nur erreicht, sondern überschritten wird, sondern schon die Entwicklung des Wertes (Tendenz) des erfassten Betriebsparameters dann beobachtet, bewertet und ausgewertet wird, wenn dieser den Toleranzbereich verlassen hat und in Richtung des Grenzwertes strebt. Dabei können verschiedene Kriterien angewandt werden, wie der den Toleranzbereich verlassende und dem Grenzwert zustrebende Wert des Betriebsparameters bewertet wird, wie dies im Folgenden anhand eines Beispiels deutlich wird.

Betriebsparameter ist beispielsweise die Betriebstemperatur des Netzwerkinfrastrukturgerätes eines Automatisierungsnetzwerkes in einer Fabrikationshalle, die nicht klimatisiert ist. Der Toleranzbereich liegt in diesem Beispielsfall von +10 bis +40°, wobei jetzt angenommen wird, dass aufgrund besonders hoher Umgebungstemperaturen die Temperatur in der Fertigungshalle deutlich ansteigt, so dass die Betriebstemperatur des Netzwerkinfrastrukturgerätes den Toleranzoberwert von 40° überschreitet und sich zu höheren Werten hin entwickelt. Solange der Grenzwert nicht überschritten ist, wird keine Fehlermeldung erzeugt, jedoch die Entwicklung des Wertes der Betriebstemperatur beobachtet. Es wird in diesem Beispielfall davon ausgegangen, dass das Netzwerkinfrastrukturgerät dann keine Schäden nimmt, wenn der Wert für die Betriebstemperatur sich in Richtung des Grenzwertes entwickelt, aber diesen nicht erreicht. Dies kann auch mehrfach hintereinander vorkommen, ohne dass davon auszugehen ist, dass aufgrund der mehrfachen Entwicklung der Betriebstemperatur außerhalb des Toleranzbereiches in Richtung des Grenzwertes das Netzwerkinfrastrukturgerät noch keinen Schaden nimmt. Unter der Vorhersage, dass das Netzwerkinfrastrukturgerät dennoch Schaden nehmen könnte, ist in diesem Beispielfall zu verstehen, dass die geschilderte Entwicklung des Wertes von außerhalb des Toleranzbereiches in Richtung des Grenzwertes nur beispielsweise 10 mal innerhalb einer vorherdefinierten Zeitspanne erfolgen darf. Wird jedoch festgestellt, dass diese Entwicklung innerhalb der vorgegebenen Zeitspanne (zum Beispiel eine Woche) mehr als 10 mal erfolgt, wird davon ausgegangen, dass aufgrund dieser Entwicklung des Wertes für die Betriebstemperatur eine Schädigung des Netzwerkinfrastrukturgerätes gegeben sein könnte, um durch eine Bedienperson zu überlegen oder zu entscheiden, ob das Netzwerkinfrastrukturgerät ausgetauscht werden soll oder nicht.

In Weiterbildung der Erfindung ist vorgesehen, dass die Vorhersage mit einem hybriden Prädiktor erfolgt, der zwei oder mehr Prädiktionsmethoden miteinander kombiniert. In besonders vorteilhafter Weise wird mit dem hybriden Prädiktor eine Trendkanalmethode und/oder exponentiell gleitende Durchschnitte und/oder eine Korrelationsrechnung durchgeführt.

Weitere vorteilhafte Ausgestaltungen sind in den weiteren Unteransprüchen angegeben, die im Folgenden erläutert werden.

Die erfindungsgemäße Lösung stellt vorzugsweise eine Kapselung des Endgeräts durch den Prädiktor dar. Dieser soll Daten des Geräts mittels eines Protokolls für das Netzwerkmanagement, beispielsweise SNMP, zyklisch abfragen, vorhandene Daten des Netzwerkgerätes auslesen und den Zustand einer ausgelesenen Größe vorhersagen. Prognostiziert der Prädiktor für diese Größe einen Übertritt aus dem Toleranz- in den Fehlerbereich, so wird dies beispielsweise für den Administrator sichtbar. Durch die Prognosevorlaufzeit besteht nun die Möglichkeit, den Fehlerfall abzuwenden, indem aktiv in das System eingegriffen wird. Ist ein Fehlerzustand nicht mehr abwendbar, so kann wenigstens vor dessen Ausfall auf eine redundante Komponente umgeschaltet werden, um so Systembeeinträchtigungen zu verhindern.

Als Prädiktionsalgorithmus kommt beispielsweise eine Kombination mehrerer Prädiktionsmethoden zum Einsatz, nachfolgend als hybrider Prädiktor bezeichnet. Diese wird zu großen Teilen auf der Zeitreihenanalyse basieren. Der Grund hierfür liegt in der Eigenschaft der beobachtbaren Größen begründet, bei denen es sich um Parameter handelt, die sich über die Zeit ändern und somit als Zeitreihe bezeichnet werden können. Vorteil dieser Konstruktion aus mehreren Prädiktoren ist die Kombination der Stärken und die Verringerung der Schwächen der einzelnen Teile. Der Prädiktor wird aus der Trendkanalmethode, der Differenz exponentiell gleitender Durchschnitte und aus der Korrelationsmethode bestehen. Die Trendkanalmethode übernimmt dabei den Part des Hauptprädiktors, generiert also die Vorhersagedaten. Die gleitenden Durchschnitte haben die Aufgabe, diese Vorhersagedaten auf deren Qualität hin zu überprüfen und diese Daten gegebenenfalls nach oben oder unten zu korrigieren. Den letzten Teil bildet die Korrelationsmethode, die keinen direkten Einfluss auf das Prädiktionsergebnis haben wird, sondern die Gefährdungsstufe nach unten oder oben verschieben kann.

Die übergeordnete Regellogik ist für die Koordination der Prädiktionsmethoden und der zusätzlichen Berechnungsinstrumente zuständig. Das heißt, diese veranlasst die einzelnen Prädiktoren zur Berechnung ihrer Ausgabedaten, verknüpft diese Daten miteinander und leitet zusätzliche Berechnungen ein, um die Gesamtprädiktion zu erhalten. Die gesamte Logik ist nach dem EVA-Prinzip aufgebaut. Das heißt Eingabe-Verarbeitung-Ausgabe. Für die übergeordnete Logik wird also erst definiert, welche Daten in das System gelangen und welche Daten als Ausgabe gewünscht sind. Als Ausgabe wird eine Prognose der Größenentwicklung einer Zeitreihe erwartet. Genau diese Zeitreihe dient dem System als Eingabedaten. Die Verarbeitung wird im System durchgeführt und wird wieder in einzelne Module gegliedert.

Der Arbeitsschritt des Hauptprädiktors ist die automatische Entwicklung von Trendkanälen, in denen sich die Größe in der Vergangenheit entwickelt hat. Sind diese Trendkanäle entwickelt, kann davon ausgegangen werden, dass die beobachtete Größe sich auch in der nahen Zukunft innerhalb dieses Trendkanals bewegt. Mit dieser Technik lassen sich also gewisse Trends der Größenentwicklung erkennen und abbilden.

Das Verfahren der gleitenden Durchschnitte unterstützt den Hauptprädiktor so, dass dieser auch kurzfristige Änderungen rechtzeitig erkennen kann.

Die Überwachung der Größenkorrelation ist der dritte Part des Prädiktors. Diese hat jedoch keinen direkten Einfluss auf das Prädiktionsergebnis, sondern beeinflusst die Gefahrenstufe. Die Korrelationsbeziehung einer Basisgröße ist nicht auf eine Hilfsgröße beschränkt, sondern auf beliebig viele Hilfsgrößen anwendbar. Jedoch definiert das Design die Beziehung zwischen einer Basisgröße und nur einer Hilfsgröße. Die Einrichtung mehrerer Korrelationsbeziehungen ist also über die Definition mehrerer Größenkorrelationen mit derselben Basisgröße möglich. Die übergeordnete Prädiktorlogik übernimmt nun den Part, die Überwachung der Größenkorrelation anzustoßen.

Der Prädiktor ist eine Softwarekomponente, die flexibel sowohl in Abhängigkeit von Geräten und deren Software, einem Netzwerkmanagementsystem oder als Standalone Software realisiert werden kann.

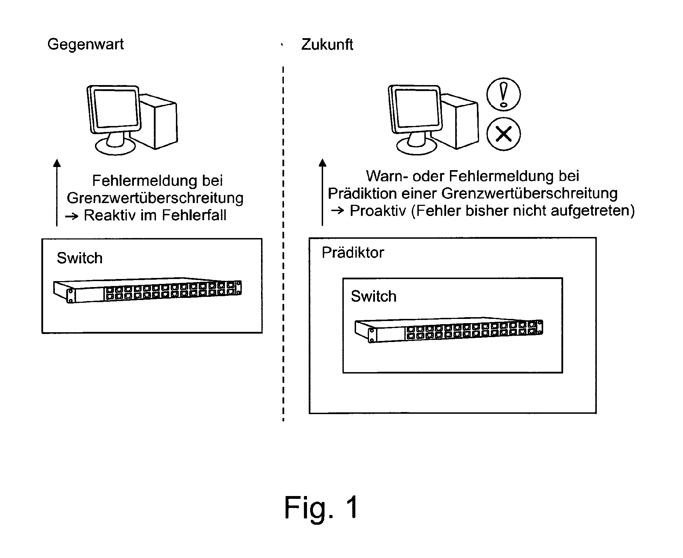

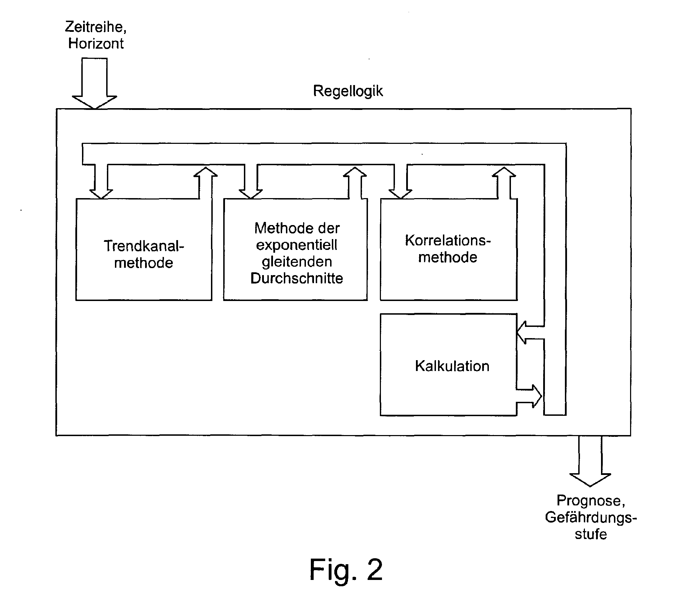

In den Figuren 1 und 2 ist das erfindungsgemäße Verfahren und ein Netzwerkinfrastrukturgerät, das zur Durchführung des erfindungsgemäßen Verfahrens ausgebildet ist, gezeigt und im Folgenden näher beschrieben.

In Figur 1, linke Darstellung, ist der Stand der Technik dargestellt, bei dem das Gerät, insbesondere das Netzwerkinfrastrukturgerät, wiederum insbesondere ein Switch, so ausgebildet ist, dass der Betriebsparameter, oder auch mehrere Betriebsparameter, überwacht werden und dann, wenn ein zulässiger Grenzwert überschritten worden ist, eine Meldung erzeugt wird. Dabei ist es ein großer Nachteil dieser Funktionsweise, dass ein Fehler erst dann erkannt und gemeldet wird, wenn der Grenzwert überschritten wurde, das heißt der Fehler schon aufgetreten ist. Hierbei muss davon ausgegangen werden, dass im Fehlerfalle nur reagiert und nicht vorbeugend agiert werden kann, weil die Meldung erst dann erzeugt wurde, wenn der Fehler schon aufgetreten ist und möglicherweise schon eine Beschädigung oder ein Ausfall des Gerätes gegeben ist.

In Figur 1, rechte Darstellung, ist schematisch dargestellt, dass das Gerät, insbesondere das Netzwerkinfrastrukturgerät, auch hier wieder insbesondere ein Switch, mit dem erfindungsgemäßen Verfahren arbeitet, wobei die zur Durchführung des erfindungsgemäßen Verfahrens erforderliche Hardware entweder Bestandteil des Gerätes oder eine Zusatzkomponente ist, die die Geräte überwacht. Hierbei ist erkennbar, dass eine Warn- oder Fehlermeldung bei Prädiktion (also Vorhersage) einer Grenzwertüberschreitung erfolgt. Das bedeutet, dass ein ganz wichtiger und wesentlicher Aspekt der Erfindung darin zu sehen ist, dass bei vorzusehender Grenzwertüberschreitung proaktiv gehandelt werden kann, wobei bislang noch kein Fehler aufgetreten ist. Durch eine entsprechende Bewertung dieser Vorhersage kann also entschieden werden, ob aus der Vorhersage eine Beschädigung oder ein Ausfall des Gerätes zu erwarten ist (mit entsprechendem Handlungsbedarf) oder ob die Vorhersage ergibt, dass keine erwartete Beschädigung oder kein erwarteter Ausfall des Gerätes vorzusagen ist.

In Figur 2 ist die der Prädiktion zugrunde liegende Regellogik dargestellt, wobei erkennbar ist, dass als hybride Prädiktoren eine Trendkanalmethode, in Verbindung mit einer Methode der exponentiell gleitenden Durchschnitte und eine Korrelationsmethode miteinander über eine Kalkulation verknüpft sind. Für diese Regellogik (übergeordnete Logik) wird also erst definiert welche Daten in das System gelangen (Zeitreihe, Horizont) und welche Daten als Ausgabe gewünscht sind (Prognose, Gefährdungsstufe). Das bedeutet, dass mit der in der Figur 2 gezeigten Regellogik die erfassten Werte des zumindest einen Betriebsparameters, vorzugsweise der mehreren Betriebsparameter, durch die innerhalb der Regellogik vorhandenen Prädiktoren bewertet werden und daraus eine Prognose abgegeben wird, ob eine Beschädigung oder ein Ausfall des Gerätes zu erwarten ist.

Definition: Prädiktion (lat. praedicere - "voraussagen") ist eine Aussage über Ereignisse, Zustände oder Entwicklung in der Zukunft.

Zusammenfassend betrifft die Erfindung ein Verfahren zur Vorhersage von Fehlerzuständen auf Netzwerkgeräten, insbesondere Ethernet Switchen, durch den Einsatz eines Softwarealgorithmus, der auf Basis von über der Zeit ausgelesenen und ausgewerteten Gerätedaten zukünftige Zustände eines Gerätes vorhersagt, weitergebildet dadurch, dass die Vorhersage mittels eines hybriden Prädiktors erfolgt, der mehrere Prädiktionsmethoden kombiniert, weitergebildet dadurch, dass der hybride Prädiktor mittels Trendkanalmethode, exponentiell gleitender Durchschnitte und der Korrelationsrechnung realisiert wird, weitergebildet dadurch, dass der Prädiktor innerhalb der Gerätesoftware eingesetzt wird, weitergebildet dadurch, dass der Prädiktor innerhalb einer Softwarekomponente für das Netzwerkmanagement eingesetzt wird und weitergebildet dadurch, dass der Prädiktor als alleinstehende Softwarekomponente eingesetzt wird.

## Patentansprüche

1. Verfahren zum Betreiben eines Netzwerkinfrastrukturgerätes, wobei zumindest ein Betriebsparameter des Netzwerkinfrastrukturgerätes erfasst wird und dann, wenn der erfasste Wert des Betriebsparameters einen vorgegebenen Grenzwert überschreitet, eine Fehlermeldung erzeugt wird, **dadurch gekennzeichnet, dass** der Betriebsparameter einen Toleranzbereich aufweist und erfasst wird, ob der über die Zeit erfasste Wert für den Betriebsparameter den Toleranzbereich verlässt und sich in Richtung des vorgegebenen Grenzwertes entwickelt, wobei dann, wenn sich der Betriebsparameter in Richtung des Grenzwertes entwickelt, schon vor Erreichen des Grenzwertes der zukünftige Zustand des Netzwerkinfrastrukturgerätes vorhergesagt und eine Meldung erzeugt wird.

2. Verfahren nach Anspruch 1, **dadurch gekennzeichnet, dass** die Vorhersage mit einem hybriden Prädiktor erfolgt, der zwei oder mehr Prädiktionsmethoden miteinander kombiniert.

3. Verfahren nach Anspruch 2, **dadurch gekennzeichnet, dass** mit dem hybriden Prädiktor eine Trendkanalmethode und/oder exponentiell gleitende Durchschnitte und/oder eine Korrelationsrechnung durchgeführt wird.

4. Verfahren nach Anspruch 3, **dadurch gekennzeichnet, dass** die Trendkanalmethode einen Hauptprädiktor bildet und mit diesem die Vorhersagedaten generiert werden.

5. Verfahren nach Anspruch 4, **dadurch gekennzeichnet, dass** die gleitenden Durchschnitte diese Vorhersagedaten auf deren Qualität hin überprüfen und diese Daten soweit erforderlich nach oben oder unten korrigieren.

6. Verfahren nach Anspruch 5, **dadurch gekennzeichnet, dass** die Korrelationsmethode keinen direkten Einfluss auf das Prädiktionsergebnis hat und die Gefährdungsstufe nach unten oder oben verschieben kann.

7. Verfahren nach einem der vorhergehenden Ansprüche, **dadurch gekennzeichnet, dass** eine übergeordnete Regellogik für die Koordination der Prädiktionsmethoden und der zusätzlichen Berechnungsinstrumente zuständig ist und die einzelnen Prädiktoren zur Berechnung ihrer Ausgabedaten veranlasst, wobei die Regellogik diese Daten miteinander verknüpft und zusätzliche Berechnungen einleitet, um die Gesamtprädiktion zu erhalten.

8. Verfahren nach Anspruch 6, **dadurch gekennzeichnet, dass** die gesamte Logik nach dem Eingabe-Verarbeitung-Ausgabe-Prinzip (EVA-Prinzip) aufgebaut ist, wobei die übergeordnete Logik erst definiert wird, welche Daten in das System gelangen und welche Daten als Ausgabe gewünscht sind, wobei als Ausgabe eine Prognose der Größenentwicklung einer Zeitreihe erwartet wird und genau diese Zeitreihe dem System als Eingabedaten dient.

9. Netzwerkinfrastrukturgerät, ausgebildet zur Durchführung des Verfahrens gemäß zumindest einem der vorhergehenden Patentansprüche.
